# EUROPEAN PATENT APPLICATION

(11) **EP 4 116 230 A1**
(43) Date of publication of application: **11.01.2023**
(21) Application number: 21184872.6
(22) Date of filing: 09.07.2021
(51) Int. Cl.: B65G 1/04, B65G 1/06

(54) **STORAGE SYSTEM WITH A MULTI-LEVEL STORAGE RACK, A VERTICAL LIFT CONNECTING THE LEVELS OF THE MULTI-LEVEL STORAGE RACK AND METHOD OF OPERATION**

(71) Applicant: Dematic GmbH, 63150 Heusenstamm (DE)
(72) Inventor: Yamashita, Shin, 61440 Oberursel (DE)
(74) Representative: Moser Götze & Partner Patentanwälte mbB

(57) **Abstract**

Storage system with a multi-level storage rack, a vertical lift connecting the levels of the multi-level storage rack, the vertical lift having a conveyor platform, at least one rack level has a conveyor adjacent to the vertical lift, and a controller configured for controlling the lift, conveyor platform and conveyor such that the lift conveyor platform or conveyor are controlled to transfer a load between the lift conveyor platform and the rack conveyor or vice versa, wherein the transfer is controlled to be performed as soon as the lift conveyor platform and the rack conveyor are at same height and lifting platform over travels beyond transition level allowing the transfer to be initiated earlier by transferring the load from the higher lift conveyor platform to the lower the rack conveyor or vice versa.

## Description

Storage system with a multi-level storage rack, a vertical lift connecting the levels of the multi-level storage rack and method of operation

Storage systems with a vertical lift connecting levels of a multi-level storage rack, wherein the vertical lift has a conveyor platform and each rack level has a buffer conveyor adjacent to the vertical lift and a controller configured for controlling the lift, a conveyor platform and rack conveyor such that the lift conveyor platform or rack conveyor are controlled to transfer a load between the lift conveyor platform and the rack conveyor or vice versa, are known. Loads are transferred between storage spaces in the racks and the buffer conveyors by storage and retrieval vehicles. Such systems are usually referred to as shuttle storage systems and for example known from the applicant: https://www.dematic.com/de-de/produkte/produktueberblick/lagertechnik/multishuttle/.

In such shuttle systems the vertical lift throughput performance has been one of the most critical parts of the system design and is often seen as a bottle neck, as there are many shuttles serving a lift.

Increasing speed and acceleration and/or deceleration of vertical lift and transfer operation is the easiest way to realize an increase in throughput. However, this also tends to compromise hardware cost, the system reliability and stability and increase energy consumption.

Additionally, the vertical lift speed is limited, especially on the downward movement by the items losing contact to the lift, if the acceleration is too high.

Therefore, the object of the present invention is to provide a way to increase vertical lift performance without increase in lift dynamics and compromising the system reliability or stability.

The principle of this invention is to make the vertical lift ready for transferring a load as early as possible.

A load transfer can only be initiated after the lift conveyor platform has arrived on a specific level and has settled at the transfer level, i. e. leveling with the adjacent conveyer, so as to prevent a load from collision with either the lift conveyor platform or the buffer conveyor.

Normally leveling is performed with a tolerance of no more than 3 mm to prevent collision.

However, in order to accomplish this, the vertical lift needs to go through a positioning process consisting of certain slow creeping movement towards transfer level and settling time for lifting carriage bouncing, swinging or vibration, both of which take time.

Moreover, settling time is increased if the vertical lift has a long vertical length (height) as frequency of bouncing, swinging gets lower with increasing height.

The inventor has realized that it is possible to minimize or omit the creeping and settling process by means of over traveling of the lifting carriage beyond the transfer level.

In other words, and according to the invention, the transfer is controlled to be performed before the lift conveyor platform and the rack conveyor are at same height by transferring the load from the higher lift conveyor platform to the lower rack conveyor or vice versa. There is no need to wait for the finishing of the levelling process.

This so-called "waterfall" allows load transfer to be performed before the lift carriage has leveled and does not require settling time for stop of lifting carriage bouncing, swinging or vibration.

Lower or higher in this sense means that the lift carriage or conveyor platform overruns the exact level by no more than 30 mm, preferably 25 mm, most preferred 20 mm.

This allows the transfer of the load to start with the load having the risk of toppling.

Same height means at same level concerning the conveyor surfaces with a tolerance of maximum 5 mm, preferably 3 mm.

In a preferred version each (every) storage level has a conveyor adjacent to the vertical lift functioning as a buffer.

It is also possible to have at, at least one rack level storage, a conveyor adjacent to the vertical lift on each side functioning as buffer. In other words, there are two opposite conveyors sandwiching the vertical lift on such a level.

Most preferred each (every) storage level has a conveyor adjacent to the vertical lift on each side.

Then it is beneficial that controller is configured for controlling the lift, conveyor platform and conveyor(s) such that the lift conveyor platform or conveyor(s) are controlled to transfer a load between the lift conveyor platform and the rack conveyor or vice versa simultaneously.

Such conveyors can be buffer conveyors as stated above or also discharge or supply conveyors for discharging or supplying goods from or to a lift, e. g. in a storage rack, or combinations of such.

In case of such a tandem cycling vertical lift, i. e. pick up on one side and drop-off on the opposite side when a conveyor is present on each side of the vertical lift on a level, the overrun can be realized by tilting the lifting carriage so that one side can be over traveled whilst opposite side is aligned with opposite conveyor.

In other words, the vertical lift conveyor platform is tilted from a horizontal plane, such that at one side the lift platform can be only coarsely positioned (i. e. not aligned and below or above depending on travel direction and pickup or drop-off direction) whilst at the opposite side the conveyor platform is aligned with opposite conveyor.

Tilting may be fixed depending on conveying direction of the adjacent conveyors also being monodirectional.

Accordingly, it is also possible to have the rack conveyors at differing heights and the lift conveyor platform horizontal to achieve the same effect.

Preferably the storage system according to the invention is implemented in a shuttle system, i. e. in a system comprising at least two parallel racks with an aisle in between and at least a single level rack servicing vehicle running the length of the aisle on tracks between storage positions and the conveyor adjacent to the vertical lift. Most preferred there is a shuttle in each level serving only that level. It is however also possible to have the shuttles performing a so-called roaming function, i. e. change aisle levels using a shuttle lift, when less shuttles are present than levels. This allows the system to be less performant but less costly.

It is possible to initiate the transfer of a load before the lift platform arrives at the transit level and as soon as it reaches the transition level to increase the speed of the transfer to a higher or full speed, i. e. by controlling the conveyor speeds in dependence of the vertical position of the lift platform.

The invention can be summarized in that loss of time is prevented by selectively performing over travel of the lifting carriage depending on lifting direction and load transfer direction.

If not desired or not needed, e. g. for a high-speed transfer using belt conveyors etc., the lift platform may be controlled to travel backwards to transfer level whilst load unit transfer is already started but before load unit is touching the opposing conveyor surface, to align the lift platform and the conveyor(s) in order to smoothen the transition.

This leveling function should only be needed if,
- the lift is approaching the transition level from above when a transfer is performed from stationary conveyor to lift conveyor, or
- the lift is approaching the transition level from below when transfer is performed from lift conveyor to stationary conveyor.

Further details of the invention will now be explained with reference to the figures, in which:
- Figure 1: shows a perspective view of a first embodiment of a storage having a lift per rack with one conveyor on the same level;
- Figure 2: shows a perspective view of a second embodiment of a storage having a lift in the foot print of each rack of an aisle and both having buffer conveyors on each side;
- Figure 3: shows a top view of figure 2, and
- Figure 4: schematically shows different versions of control of over run of the lift platform of the lifts;
- Figure 5: schematically shows different versions of control of tilting the lift platform of the lifts when performing transfer of loads from and to the lift platform and
- Figure 6: schematically shows different versions of control of the lift platform of the lifts when performing transfer of loads from and to the lift platform with different height buffer conveyors.

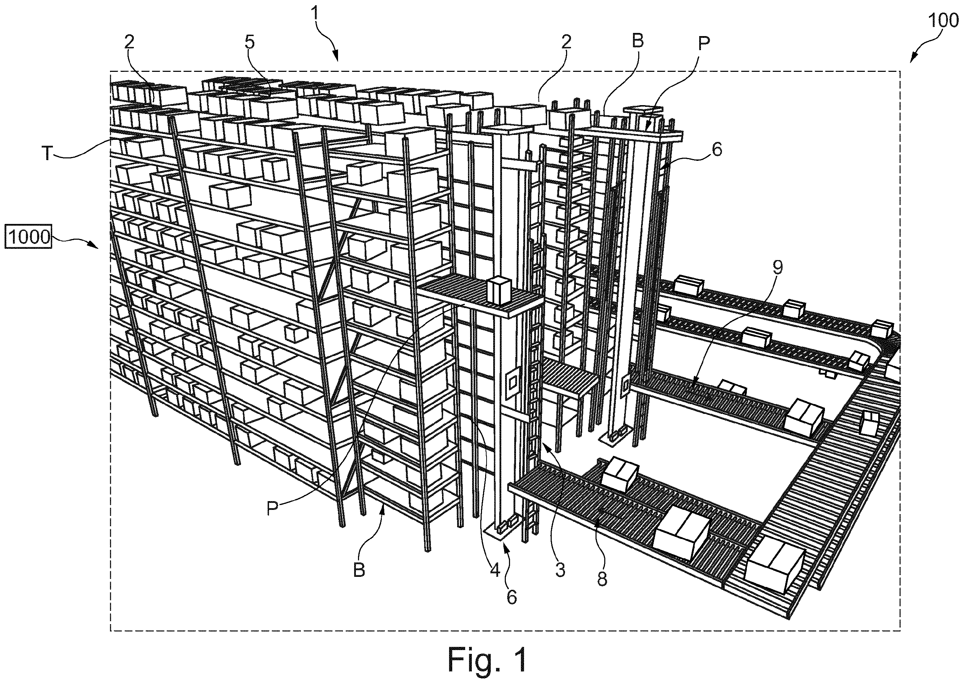

In Figure 1 a first embodiment of a rack storage system referenced as 100 is shown. It comprises a storage 1 with at least two multi-level longitudinally extending storage racks 2 that are laterally separated by an aisle 3. In the figure only two such aisles 3 with corresponding double deep storage racks 2 are detailed, even though it is understood that multiple such racks and aisles may be present.

In each level guide tracks 4 for shuttles 5 extend the length of the aisle 3 and past at least two lifts 6, having a liftable and lowerable lift platform P for lifting or lowering load units T, which are trays in the present embodiment, but can obviously be any kind of package or container, box, tote etc. The lift platform P has an integrated conveyor, e. g. a roller conveyor or belt conveyor.

Said guide tracks 4 being arranged in each such level in a way that the shuttles 5 may fully access the storage racks 2 and each lift 6 by arranging the guide tracks 4 to extend along the aisle 3 and past the lifts 6.

The shuttles 5 are designed to transfer the trays between the storage locations in the storage racks 2 and the lifts 6.

To decouple this exchange buffer conveyors B are arranged on one side of each lift 6, allowing for an exchange or transfer in a single cycle manner.

The other side of each lift 6 is connected to a conveyor 8, 9 for transporting storage units to and from said lifts 6 (see arrows).

The lifts 6 are arranged in a row in extension of the longitudinal extension of the storage rack 2 at the same front end of the storage.

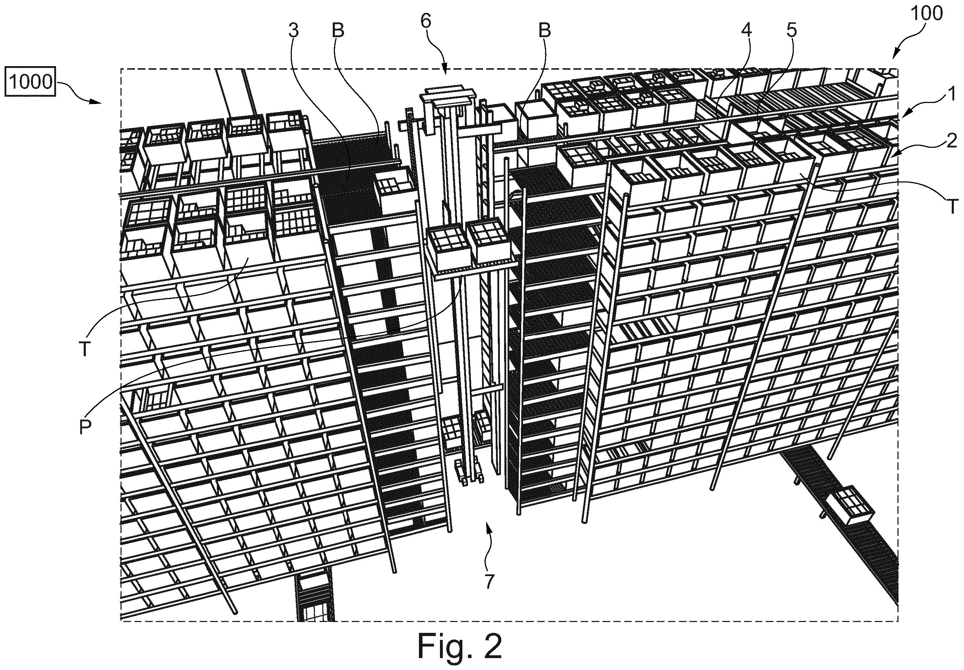

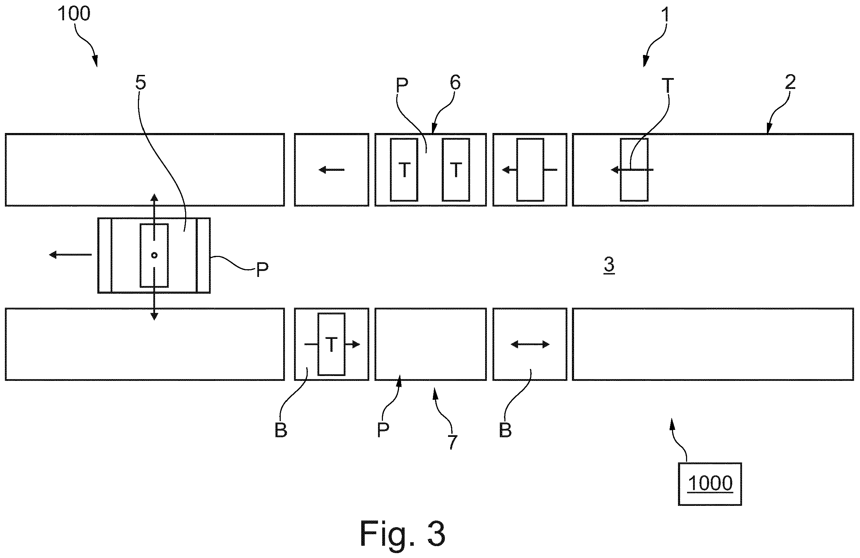

Similarly, in Figures 2 and 3 a top view of a second embodiment of a storage 100 in a storage level having a lift 6, 7 in the foot print of each rack 2 of an aisle 3 and both having buffer conveyors B on each side is shown, such that a shuttle 5 may pass the lifts 6, 7 and move along the whole aisle 3 to access each buffer conveyor B irrespective of location and all storage places in the racks 2.

Having buffer conveyors B on each side of the lift 6 allows for an exchange or transfer in a dual cycle manner, i. e. supply and discharge of units T to the lift and from the lift at the same time.

The buffer conveyors B may be roller or belt conveyors and be either unidirectional or monodirectional depending on the necessary material flow of units T.

In all of the described systems above, a controller 1000 (depicted schematically) is used to control the lifts 6, 7 and conveyors as well as other functions.

In the present case such control of functions includes the travel and alignment of the lift platform P and its lift platform conveyors when handling loads or units T.

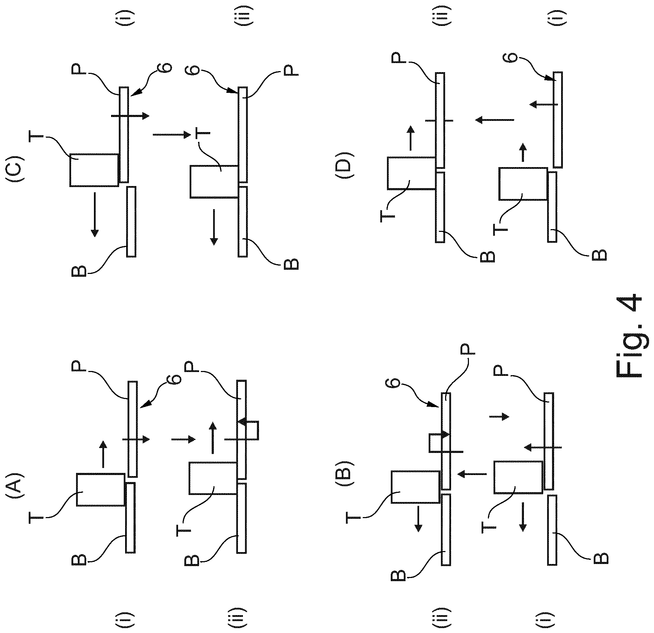

In Figure 4A the transfer of a load unit T from a buffer conveyor onto a lift platform P of lift 6 is shown for the case that the lift platform must be lowered to be brought to the level of exchange.

According to the invention the transfer is controlled to be performed as soon as the lift platform conveyor P and the rack conveyor B are at same height but lift platform over travels beyond the transition point then transferring the load unit T from the higher rack conveyor B to the lower lift platform conveyor P.

This allows for the lift platform P to first (i) be quickly generally coarsely positioned overring the exchange level and the transfer to be initiated. Then (ii) the platform P can be exactly positioned slowly by creeping upwards while the transfer is taking place. This saves time.

In Figure 4B the transfer of a load unit T from a lift platform P of lift 6 onto a buffer conveyor B is shown for the case that the lift platform must be raised to be brought to the level of exchange.

According to the invention the transfer is controlled to be performed as soon as the lift platform conveyor P and the rack conveyor B are at same height but lift platform over travels beyond the transition point then transferring the load unit T from the higher lift platform conveyor P to the lower rack conveyor B.

This allows for the lift platform P to first (i) be quickly generally coarsely positioned overring the exchange level and the transfer to be initiated. Then (ii) the platform P can be exactly positioned slowly by creeping downwards while the transfer is taking place. This saves time.

In Figure 4C the transfer of a load unit T from a lift platform P of lift 6 onto a buffer conveyor B is shown for the case that the lift platform must be lowered to be brought to the level of exchange.

According to the invention the transfer is controlled to be performed before the lift platform conveyor P and the rack conveyor B are at same height by transferring the load unit T from the higher lift platform conveyor P to the lower rack conveyor B.

This allows for the lift platform P to first (i) be quickly generally coarsely positioned above the exchange level and the transfer to be initiated. Then (ii) the platform P can be exactly positioned slowly by creeping downwards while the transfer is taking place. This saves time.

In Figure 4D the transfer of a load unit T from a buffer conveyor B onto a lift platform P of lift 6 is shown for the case that the lift platform must be raised to be brought to the level of exchange.

According to the invention the transfer is controlled to be performed before the lift platform conveyor P and the rack conveyor B are at same height by transferring the load unit T from the higher rack conveyor B to the lower lift platform conveyor P.

This allows for the lift platform P to first (i) be quickly generally coarsely positioned below the exchange level and the transfer to be initiated. Then (ii) the platform P can be exactly positioned slowly by creeping upwards while the transfer is taking place. This saves time.

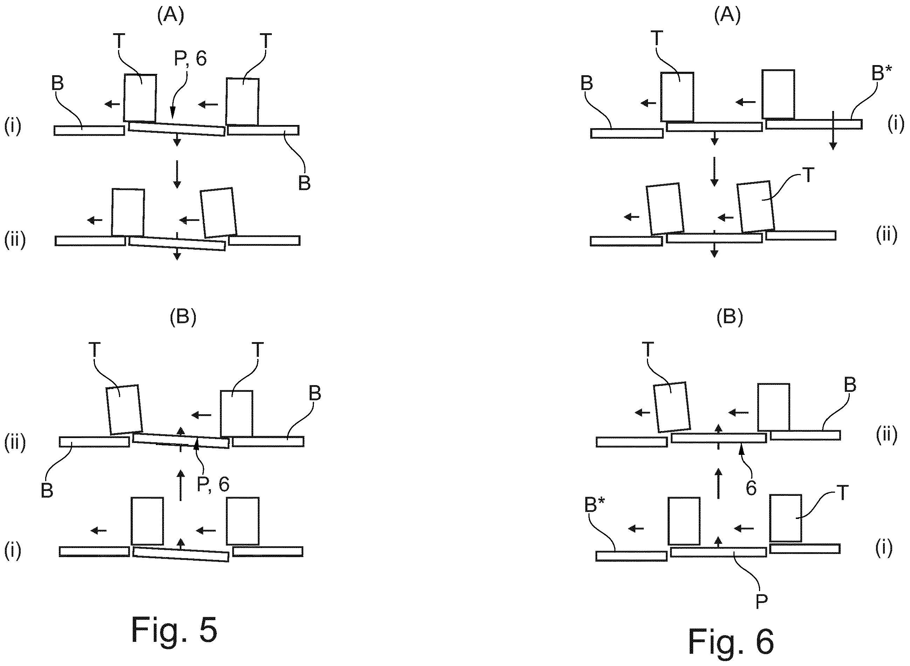

Figure 5A schematically shows control of tilting the lift platform P of a lift 6 when performing transfer of load units T from the lift platform P to a buffer conveyor B on one side and vice versa on the other side, when the lift platform P must be lowered to the exchange level. In this case the lift platform P is tilted to be lower on the side of exchange from the buffer conveyor B to the lift platform P.

As depicted, this allows the lift platform P to over travel beyond the transition level on the right-hand side allowing an early transfer to be initiated whilst first (i) being quickly generally coarsely positioned above the exchange level on the left-hand side by lowering the platform and the transfer to be initiated. Then (ii) the platform P can be exactly positioned slowly by creeping further downwards while the transfer is taking place and finalized. This saves time. The lifting platform may then creep up to the level such that the waterfall of both sides become equal for smoother transition.

Figure 5B schematically shows control of tilting the lift platform P of a lift 6 when performing transfer of load units T from the lift platform P to a buffer conveyor B on one side and vice versa on the other side, when the lift platform P must be raised to the exchange level. In this case the lift platform P is tilted to be lower on the side of exchange from the buffer conveyor B to the lift platform P.

As depicted, this allows the lift platform P to over travel beyond the transition level on the left-hand side allowing an early transfer to be initiated whilst first (i) being quickly generally coarsely positioned above the exchange level on the right-hand side by raising the platform and the transfer to be initiated. Then (ii) the platform P can be exactly positioned slowly by creeping further upwards while the transfer is taking place and finalized. This saves time. The lifting platform may then creep down to the level such that the waterfall of both sides become equal for smoother transition.

In the cases shown in Figures 4 and 5 the transfers of the units T may be initiated by allowing the units T to start the transfer from a higher source position to a lower goal position by overcoming a small step or height difference that is small enough such that the units T do not topple over.

As shown in Figure 6A and 6B a likewise effect can be achieved without tilting by having the buffer conveyors B on the sides of the lift not at same height. In other words, the lift platform P is horizontally oriented and the opposing rack conveyors B are on different heights.

Figure 6A schematically shows control of the lift platform P of a lift 6 when performing transfer of load units T from the lift platform P to a buffer conveyor B on one side and vice versa on the other side, when the lift platform P must be lowered to the exchange level. In this case the lift platform P is horizontally oriented and on the side of exchange to the buffer conveyor B this buffer conveyor B is lower than that buffer conveyor B* on the other side.

As depicted, this allows the lift platform P to over travel beyond the transition level on the right-hand side allowing an early transfer to be initiated whilst first (i) being quickly generally coarsely positioned above the exchange level on the left-hand side by lowering the platform and the transfer to be initiated. Then (ii) the platform P can be exactly positioned slowly by creeping further downwards while the transfer is taking place and finalized. This saves time. The lifting platform may then creep up to the level such that the waterfall of both sides become equal for smoother transition.

Figure 6B schematically shows control of the lift platform P of a lift 6 when performing transfer of load units T from the lift platform P to a buffer conveyor B* on one side and vice versa on the other side, when the lift platform P must be raised to the exchange level. In this case the lift platform P is horizontally oriented and on the side of exchange to the buffer conveyor B* this buffer conveyor B* is lower than that buffer conveyor * on the other side.

As depicted, this allows the lift platform P to over travel beyond the transition level on the left-hand side allowing an early transfer to be initiated whilst first (i) being quickly generally coarsely positioned above the exchange level on the right-hand side by raising the platform and the transfer to be initiated. Then (ii) the platform P can be exactly positioned slowly by creeping further upwards while the transfer is taking place and finalized. This saves time. The lifting platform may then creep down to the level such that the waterfall of both sides become equal for smoother transition.

## Claims

1. Storage system with a multi-level storage rack, a vertical lift connecting the levels of the multi-level storage rack, the vertical lift having a conveyor platform, at least one rack level has a conveyor adjacent to the vertical lift, and a controller configured for controlling the lift, conveyor platform and conveyor such that the lift conveyor platform or conveyor are controlled to transfer a load between the lift conveyor platform and the rack conveyor or vice versa, wherein the transfer is controlled to be performed as soon as the lift conveyor platform and the rack conveyor are at same height and lifting platform over travels beyond transition level allowing the transfer to be initiated earlier by transferring the load from the higher lift conveyor platform to the lower the rack conveyor or vice versa.

2. Storage system according to claim 1, **characterized in that** each storage level has a conveyor adjacent to the vertical lift functioning as a buffer or supply and discharge conveyor.

3. Storage system according to claim 1 or 2, **characterized in that** the at least one rack level storage has a conveyor adjacent the vertical lift on each side functioning as buffer.

4. Storage system according to claim 3, **characterized in that** each storage level has a conveyor adjacent to the vertical lift on each side.

5. Storage system according to claim 3 or 4, **characterized in that** controller is configured for controlling the lift, conveyor platform and conveyor such that the lift conveyor platform or conveyor are controlled to transfer a load between the lift conveyor platform and the rack conveyor or vice versa simultaneously.

6. Storage system according to claim 5, **characterized in that** the vertical lift conveyor platform which is either statically tilted of dynamically tilted from a horizontal plane, such that that one side can be over traveled whilst opposite side is aligned with opposing conveyor.

7. Storage system according to any preceding claims 1 - 5, **characterized in that** vertical lift conveyor platform is horizontally oriented and the opposing rack conveyors are on different heights.

8. Storage system according to any preceding claim, **characterized in that** the system comprises at least two parallel racks with an aisle in between and a single level rack servicing vehicle running the length of the aisle between storage positions and the conveyor adjacent to the vertical lift.

9. Storage system according to any preceding claim, **characterized in that** the lift conveyor platform is controlled to creep back after the over travel beyond the transition level to the transition level.

10. Method for operation of a storage system including
a vertical lift in a storage having a multi-level storage rack, the vertical lift having a conveyor platform, each rack level has a buffer conveyor adjacent to the vertical lift, wherein the lift conveyor platform or rack conveyor are controlled to transfer a load between the lift conveyor platform and the rack conveyor or vice versa, wherein the transfer is controlled to be performed as soon as the lift conveyor platform and the rack conveyor are at same height and lifting platform over travels beyond transition level allowing the transfer to be initiated earlier by transferring the load from the higher lift conveyor platform to the lower the rack conveyor or vice versa .
